# EUROPEAN PATENT APPLICATION

(11) **EP 4 481 917 A1**
(43) Date of publication of application: **25.12.2024**
(21) Application number: 24166526.4
(22) Date of filing: 26.03.2024
(51) Int. Cl.: H01M 50/209, H01M 50/231, H01M 50/271, H01M 10/656, H01M 10/66

(54) **ENERGY STORAGE APPARATUS**

(30) Priority: 20.06.2023 KR 20230078738
(71) Applicant: SK On Co., Ltd., Seoul 03161 (KR)
(72) Inventor: PARK, Byung Jun, 34124 Daejeon (KR); PARK, Sin Ho, 34124 Daejeon (KR); PARK, Chan Ho, 34124 Daejeon (KR); BAEK, Moo Han, 34124 Daejeon (KR); JUNG, Jae Won, 34124 Daejeon (KR)
(74) Representative: Prüfer & Partner mbB Patentanwälte · Rechtsanwälte

(57) **Abstract**

An energy storage apparatus of the present disclosure includes an accommodating body including an accommodating portion including a layered structure provided with an accommodating space and an internal passage through which a fluid is allowed to pass, and a battery cell accommodated in the accommodating space, wherein the battery cell is in thermal contact with a fluid passing through the internal passage

## Description

### BACKGROUND OF THE INVENTION

### 1. Field

The present disclosure relates to an energy storage apparatus. In addition, the present disclosure relates to an energy storage system including the energy storage apparatus.

### 2. Description of the Related Art

Recently, demand for mobile devices such as smartphones, tablet PCs, and wireless earphones is increasing. In addition, as the development of electric vehicles, batteries for energy storage, robots, and satellites is carried out in a full scale, research is being actively conducted on high-performance secondary batteries that can be repeatedly charged and discharged, as an energy source.

Currently commercialized secondary batteries include nickel cadmium batteries, nickel hydrogen batteries, nickel zinc batteries, and lithium secondary batteries. Among these, lithium secondary batteries have the advantage of having almost no memory effect compared to nickel-based secondary batteries, and so they can be freely charged and discharged, have a very low self-discharge rate, and have high energy density.

An energy storage system (ESS) is a system that stores produced energy (e.g. electric power) in a storage apparatus and supplies the stored energy when needed.

The energy storage apparatus can store, for example, electric power. Generally, the energy storage apparatus may include one or more battery modules to store electric power, and the battery module may be accommodated in a rack structure included in the energy storage apparatus.

Meanwhile, to simplify the structure and reduce the number of components used, a so-called cell-to-rack type of energy storage apparatus is on the rise, as battery cells are directly accommodated in a rack structure of the apparatus rather than battery cells are manufactured into a battery module which is then accommodated in a rack structure. However, such a cell-to-rack type energy storage apparatus has problems in that it is difficult to manage the heat generated from the battery cells and the apparatuses are vulnerable to vibration or external shock.

### SUMMARY OF THE INVENTION

An object of the present disclosure is to provide an energy storage apparatus that makes it easier to manage the heat generated from a battery cell and that improves the problem of being vulnerable to vibration or external shock.

Another object of the present disclosure is to provide an energy storage apparatus in which a heat dissipation medium can more easily recover the heat generated from a battery cell, through a unique structure.

Still another object of the present disclosure is to provide an energy storage apparatus that is capable of accommodating one or more battery cells and that continuously applies pressure to at least one surface of the battery cells to stabilize the charge/discharge lifetime and cycle and extend the lifetime of the battery cells.

In addition, the battery cell of the present disclosure can be widely applied in the field of electric vehicles, battery charging stations, and green technology, such solar power generation, and wind power generation using batteries. In addition, the battery cell of the present disclosure can be used in eco-friendly electric vehicles, hybrid vehicles, etc. to prevent climate change by suppressing air pollution and greenhouse gas emissions.

An energy storage apparatus according to an example of the present disclosure may include: an accommodating body including an accommodating portion including a layered structure provided with an accommodating space and an internal passage through which a fluid is allowed to pass; and a battery cell accommodated in the receiving space, wherein the battery cell may be in thermal contact with a fluid passing through the internal passage.

In an energy storage apparatus according to an example of the present disclosure, the accommodating body may include one or more holes so that the internal passage communicates with the outside of the accommodating body.

In an energy storage apparatus according to an example of the present disclosure, the accommodating body may include a fan at a position corresponding to the one or more holes, and the fan may transfer a fluid outside the accommodating body to an internal passage.

In an energy storage apparatus according to an example of the present disclosure, the battery cell may include a terminal protruding on at least one surface, and a surface of the battery cell that is different from the surface on which the terminal protrudes may be in thermal contact with a fluid passing through the internal passage.

In an energy storage apparatus according to an example of the present disclosure, the battery cell may include a terminal protruding on only one surface, and a surface of the battery cell that is opposite to the surface on which the terminal protrudes may be in thermal contact with a fluid passing through the internal passage.

In an energy storage apparatus according to an example of the present disclosure, the terminal may protrude toward the outside of the accommodating body.

In an energy storage apparatus according to an example of the present disclosure, the layered structure may further include a resin layer on an inner wall provided with the accommodating space.

In an energy storage apparatus according to an example of the present disclosure, the layered structure may pressurize the battery cell accommodated in the accommodating space.

In an energy storage apparatus according to an example of the present disclosure, the accommodating body may include a plurality of accommodating portions.

In an energy storage apparatus according to an example of the present disclosure, the internal passage may be positioned between the plurality of accommodating portions.

An energy storage apparatus according to an example of the present disclosure may further comprise: a front cover covering at least a part of the one or more holes, wherein the front cover includes a fluid passage portion allowing a fluid to pass at a position corresponding to the one or more holes.

In an energy storage apparatus according to an example of the present disclosure, the front cover may further include a spacing portion, and the spacing portion may be connected to the accommodating body.

In an energy storage apparatus according to an example of the present disclosure, the fluid passage portion may be spaced apart from the one or more holes.

In an energy storage apparatus according to an example of the present disclosure, the accommodating body may include a heat-conductive partition wall, and the heat-conductive partition wall may be positioned between the accommodating portion and the internal passage.

In an energy storage apparatus according to an example of the present disclosure, the battery cell may be in direct contact with the heat-conductive partition wall.

In an energy storage apparatus according to an example of the present disclosure, the accommodating body may include steel.

An energy storage apparatus according to an example of the present disclosure may be a cell-to-rack type energy storage apparatus.

The present disclosure can provide an energy storage apparatus that makes it easier to manage the heat generated from a battery cell and that improves the problem of being vulnerable to vibration or external shock.

The present disclosure can provide an energy storage apparatus in which a heat dissipation medium can more easily recover the heat generated from a battery cell, through a unique structure.

The present disclosure can provide an energy storage apparatus that is capable of accommodating one or more battery cells and that continuously applies pressure to at least one surface of the battery cells to stabilize the charge/discharge lifetime and cycle and extend the lifetime of the battery cells.

### BRIEF DESCRIPTION OF THE DRAWINGS

FIG. 1 shows a diagram briefly showing the structure of an energy storage apparatus according to an example of the present disclosure.
FIG. 2 briefly shows the structure of an energy storage apparatus according to an example of the present disclosure, and is a diagram showing a cross-section that is cut along the XY-plane in FIG. 1.
FIG. 3 briefly shows the structure of an energy storage apparatus according to an example of the present disclosure, and is a diagram showing a cross-section that is cut along the XY-plane in FIG. 1.
FIG. 4 shows a diagram briefly showing the structure of a battery cell according to an example of the present disclosure.
FIG. 5 shows a diagram briefly showing the structure of a battery cell according to an example of the present disclosure.
FIG. 6 briefly shows the structure of an energy storage apparatus according to an example of the present disclosure, and is a diagram showing a battery cell being inserted into an accommodating space.
FIG. 7 briefly shows a part of the structure of an energy storage apparatus according to an example of the present disclosure, and is a diagram showing a battery cell being inserted into an accommodating space.
FIG. 8 briefly shows a part of the structure of an energy storage apparatus according to an example of the present disclosure, and is a diagram showing a battery cell that has been inserted into an accommodating space.
FIG. 9 shows a diagram briefly showing the structure of an energy storage apparatus according to an example of the present disclosure.
FIG. 10 shows a diagram briefly showing the structure of an energy storage apparatus according to an example of the present disclosure.
FIG. 11 briefly shows the structure of an energy storage apparatus according to an example of the present disclosure, and is a diagram showing a cross-section that is cut along the XY-plane in FIG. 10.
FIG. 12 briefly shows the structure of an energy storage apparatus according to an example of the present disclosure, and is a diagram showing a cross-section that is cut along the XY-plane in FIG. 10.
FIG. 13 shows a diagram briefly showing the structure of an energy storage apparatus according to an example of the present disclosure.
FIG. 14 shows a diagram briefly showing the structure of an energy storage apparatus according to an example of the present disclosure.

### DETAILED DESCRIPTION

The structural or functional descriptions of embodiments disclosed in the present disclosure are merely illustrated for the purpose of explaining embodiments according to the technical principle of the present disclosure, and embodiments according to the technical principle of the present disclosure may be implemented in various forms in addition to the embodiments disclosed in the present disclosure. In addition, the technical principle of the present disclosure is not construed as being limited to the embodiments described in the present disclosure.

Among the physical properties mentioned in the present disclosure, in cases where the measurement temperature affects the physical properties, the physical properties are those measured at room temperature and under atmospheric pressure, unless otherwise specified.

The term "room temperature" used in the present disclosure is a natural temperature that is not heated or cooled, and may refer to, for example, any one temperature in the range of 10 °C to 30 °C, for example, a temperature about 15 °C or higher, about 18 °C or higher, about 20 °C or higher, about 23 °C or higher, about 27 °C or lower, or 25 °C. Unless otherwise specified in the present disclosure, the unit of temperature is Celsius (°C).

Among the physical properties mentioned in the present disclosure, in cases where the measurement pressure affects the physical properties, the physical properties are those measured under atmospheric pressure, unless otherwise specified.

The term "atmospheric pressure" used in the present disclosure refers to natural pressure that is not pressurized or decompressed, and atmospheric pressure in the range of about 700 mmHg to 800 mmHg is usually referred to as atmospheric pressure.

The term "a to b" used in the present disclosure refers to a range between a and b while including a and b. For example, "including a to b parts by weight" has the same meaning as including within the range of a to b parts by weight.

The terms "height (or depth)," "width," and "breadth" used in the present disclosure refer to an average value, unless otherwise specified, and are measured using a measuring device capable of measuring height (or depth), width, and breadth, respectively, according to methods known in the art.

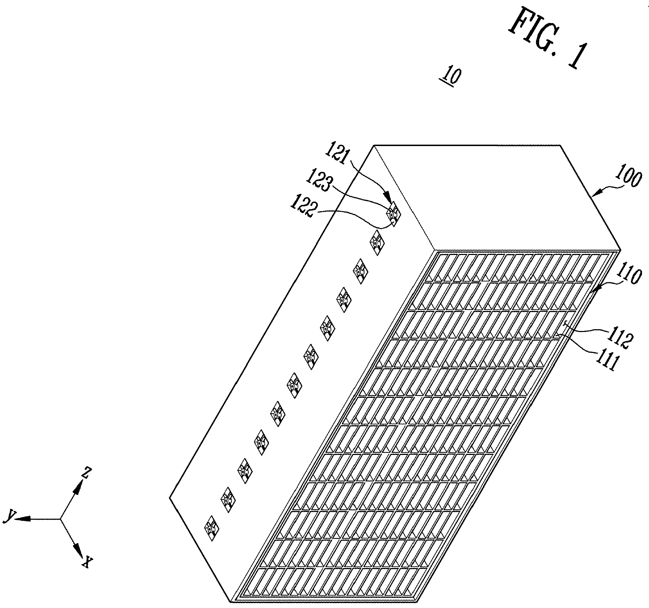

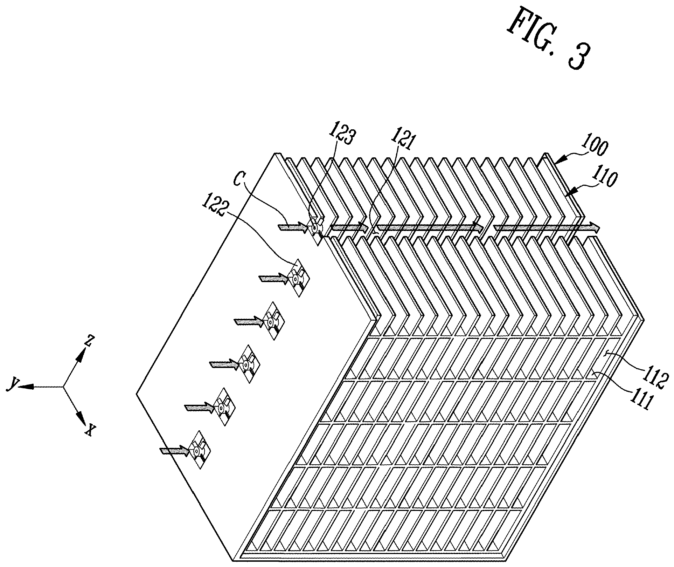

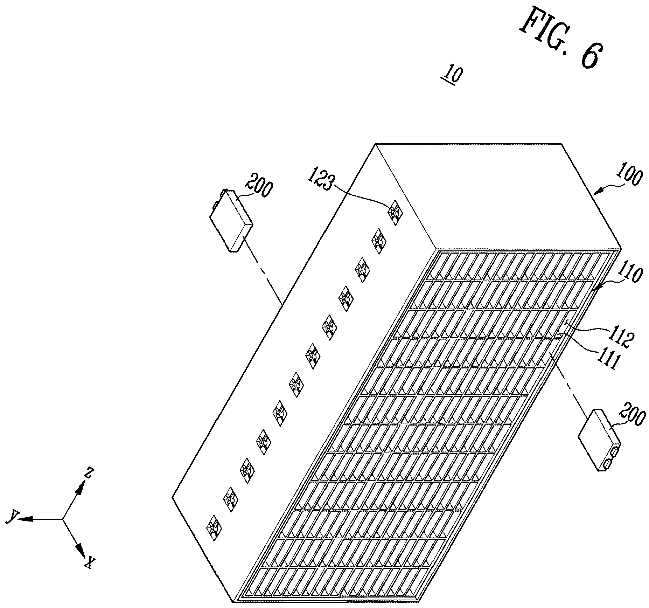

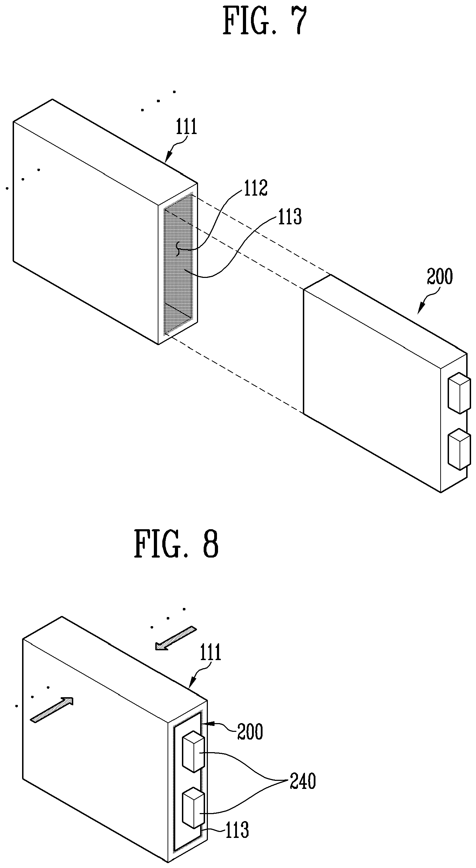

The present disclosure can provide an energy storage apparatus 10 that makes it easier to manage the heat generated from a battery cell 200 and that improves the problem of being vulnerable to vibration or external shock (see FIGS. 1 and 6). The present disclosure can provide an energy storage apparatus 10 in which a heat dissipation medium can more easily recover the heat generated from a battery cell 200, through a unique structure (see FIG. 3). The present disclosure can provide an energy storage apparatus 10 that is capable of accommodating one or more battery cells 200 and that continuously applies pressure to at least one surface of the battery cells to stabilize the charge/discharge lifetime and cycle and extend the lifetime of the battery cells (see FIG. 8). In addition, an energy storage apparatus 10 according to an example of the present disclosure may be a cell-to-rack type energy storage apparatus.

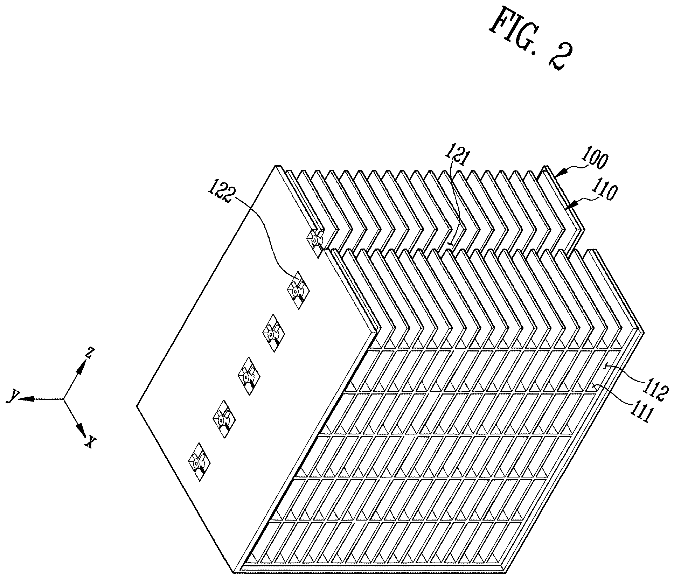

FIG. 1 shows a diagram briefly showing the structure of an energy storage apparatus 10 according to an example of the present disclosure. In addition, FIGS. 2 and 3 briefly show the structure of an energy storage apparatus 10 according to an example of the present disclosure, and are diagrams showing a cross-section that is cut along the XY-plane in FIG. 1.

An energy storage apparatus 10 according to an example of the present disclosure may include an accommodating body 100. The accommodating body 100 may include an accommodating space 112 in which a battery cell 200 may be accommodated. In addition, the energy storage apparatus 10 may include a battery cell 200 accommodated in the accommodating space 112.

In an energy storage device 10 according to an example of the present disclosure, the accommodating portion 110 may include a layered structure 111 provided with an accommodating space 112. In addition, the accommodating body 100 may include an internal passage 121 through which a fluid C is allowed to pass.

In an energy storage apparatus 10 according to an example of the present disclosure, the accommodating body 100 may include steel. Specifically, the accommodating body 100 may be manufactured by connecting steel frames to each other. When the accommodating body 100 includes steel, even if a battery cell 200 is inserted into the accommodating space 112, the problem of vulnerability to vibration or external shock can be improved.

In the an storage apparatus 10 according to an example of the present disclosure, the battery cell 200 may be in thermal contact with the fluid C passing through the internal passage 121.

The term "thermal contact" used in the present disclosure may mean a state in which two objects are in direct or indirect contact so that heat can be transferred to each other. Here, the transfer of heat may mean conduction and/or convection. In addition, a state of direct contact may mean a state in which two objects are physically in direct contact with each other in at least some regions. In addition, a state of indirect contact may mean a state in which a heat medium material is positioned between two objects and heat is transferred through the heat medium material. In addition, the convection may mean forced convection by the fluid C.

Specifically, the heat generated from a battery cell 200 accommodated in the accommodating space 112 may be heat-transferred to a fluid C passing through the internal passage 121 due to forced convection. This case may be referred to as thermal contact in a state of direct contact.

In addition, in another example, the battery cell 200 may be in contact with a heat medium material provided in a part of the accommodating space 112, and the heat generated from the battery cell 200 may be heat-transferred through conduction to the heat medium material and the heat medium material that has received the transferred heat may transfer the heat to a fluid C passing through the internal passage 121 through forced convection. This case may be referred to as a thermal contact in a state of indirect contact.

In other words, in an energy storage apparatus 10 according to an example of the present disclosure, a battery cell 200 may be in thermal contact with a fluid C passing through an internal passage 121, and the fluid C may dissipate the heat generated from the battery cell 200 through forced convection.

The term "fluid (C)" used in the present disclosure may refer to a substance in a liquid state, a substance in a gaseous state, or a combination thereof under room temperature and atmospheric pressure conditions. For example, the fluid may include a substance in a liquid state, a substance in a gaseous state, or a combination thereof that is easy to obtain and that is capable of absorbing and recovering the heat generated from a battery cell 200, and it may be water, air, or a combination thereof. The type of the fluid is not particularly limited as long as it is capable of absorbing the heat generated while a battery cell 200 operates.

In an energy storage apparatus 10 according to an example of the present disclosure, the fluid may be a substance in a gaseous state under room temperature and atmospheric pressure conditions, and for example, the substance in a gaseous state may be air.

Meanwhile, the fluid C may be a heat dissipation medium or a heat exchange medium, and may recover the heat generated from the battery cell 200 by making thermal contact with the battery cell 200.

Referring to FIG. 1, an energy storage apparatus 10 according to an example of the present disclosure may include an accommodating portion 110 including one or more layered structures 111. In the energy storage apparatus 10, the accommodating portion 110 may include a plurality of layered structures 111, and the plurality of layered structures 111 are not particularly limited, but may be connected to each other and stacked as shown in FIG. 1 to have a shape with a latticed cross-section.

Referring to FIG. 1, in an energy storage apparatus 10 according to an example of the present disclosure, a layered structure 111 may be provided with one or more accommodating spaces 112. The size of the accommodating space 112 may be determined depending on the size of the battery cell 200. The breadth and width of the accommodating space 112 may be larger than the breadth and width of the battery cell 200, respectively. However, the accommodating space may be designed such that the breadth and width may not be significantly different in order that the battery cell 200 is easily inserted into the accommodating space 112 and does not easily escape from the accommodating space 112. In addition, the depth of the accommodating space 112 may be determined according to the height of the battery cell 200, and may be designed such that the battery cell 200 may be in thermal contact with a fluid C flowing through an internal passage 121.

In an energy storage apparatus 10 according to an example of the present disclosure, the accommodating body 100 may include a plurality of layered structures 111. In addition, each of the layered structures 111 may independently include one or more accommodating spaces 112, and preferably may include a plurality of accommodating spaces 112.

Referring to FIG. 1, in an energy storage apparatus 10 according to an example of the present disclosure, an accommodating body 100 includes a plurality of layered structures 111 provided with a plurality of accommodating spaces 112.

In an energy storage apparatus 10 according to an example of the present disclosure, the accommodating body 100 may form a plurality of accommodating spaces 112 and may include a partition wall to distinguish each accommodating space 112. The number of accommodating spaces 112 in the layered structure 111 may be determined according to the number of partition walls. For example, referring to FIG. 1, when there are k partition walls, the number of accommodating spaces 112 may be k+1 (k is a positive number).

In an energy storage apparatus 10 according to an example of the present disclosure, the shape of the accommodating space 112 may be designed in consideration of the shape of a battery cell 200. Referring to FIG. 1, in order for a prismatic battery cell 200 to be introduced into the accommodating space 112, the accommodating space 112 may have a hexahedral engraved shape in consideration of the shape of a prismatic battery cell 200.

Referring to FIGS. 1 and 2, the accommodating space 112 has a hexahedral engraved shape in consideration of the shape of a battery cell 200, which is prismatic. However, even when the shape of the battery cell 200 is not prismatic but circular or a pouch type, the accommodating space may be designed in consideration of the shape thereof.

In an energy storage apparatus 10 according to an example of the present disclosure, the accommodating body 100 may include one or more holes 122 so that the internal passage 121 and the outside of the accommodating body 100 communicate with each other.

Referring to FIG. 1, in an energy storage apparatus 10 according to an example of the present disclosure, the accommodating body 100 include a hole 122 that communicates the outside of the accommodating body 100 and an internal passage 121 with each other, and the holes 122 may be provided in a plural number on one surface of the accommodating body 100.

In an energy storage apparatus 10 according to an example of the present disclosure, the accommodating body 100 may include one or more holes 122 so that a fluid C capable of dissipating the heat generated from the battery cell 200 may flow into an internal passage 121. In other words, a fluid C outside an accommodating body 100 may effectively dissipate the heat generated from the battery cell 200 while passing through an internal passage 121.

Referring to FIGS. 2 and 3, the energy storage apparatus 10 may include an internal passage 121. A fluid C outside the accommodating body 100 may flow into an internal passage 121 through a hole 122.

In an energy storage apparatus 10 according to an example of the present disclosure, the number of holes 122 may be determined according to the number of layered structures 111. The number of holes 122 may be less or more than or the same as the number of layered structures 111. Preferably, to more easily discharge the heat generated from a battery cell 200, the number of holes 122 may be more than or equal to the number of layered structures 111. Referring to FIG. 1, in the energy storage apparatus 10, the number of holes 122 may be the same as the number of layered structures 111.

In an energy storage apparatus 10 according to an example of the present disclosure, a hole 122 may be provided at a position in consideration of the height of each layered structure 111. In addition, when a plurality of holes 122 are provided, each hole 122 may be provided at a position in consideration of the height of each layered structure 111.

In an energy storage apparatus 10 according to an example of the present disclosure, the accommodating body 100 may include a hole 122 corresponding to a specific one layered structure 111. Referring to FIG. 1, a hole 122 corresponding to a specific one layered structure 111 may be positioned at a point approximately 1/2 of the height of the layered structure 111 from the bottom of the specific one layered structure 111.

When the position of the hole 122 is designed in consideration of the height of each layered structure 111 as described above, heat dissipation of a battery cell 200 accommodated in the accommodating space 112 may be made easier. In addition, referring to FIG. 1, the accommodating body 100 may have one hole 122 corresponding to each layered structure 111, but may have a plurality of holes 122.

In an energy storage apparatus 10 according to an example of the present disclosure, the fan 123 may transfer a fluid C outside the accommodating body 100 to an internal passage 121. Specifically, the fan 123 may include one or more blades, and may transfer a fluid C outside the accommodating body 100 to an internal passage 121 through rotation of the blades. In other words, the fan 123 may forcibly transfer a fluid C outside the accommodating body 100 to an internal passage 121.

Meanwhile, the fan 123 may rotate the blades by receiving external power through a power supply device and forcefully transfer a fluid C to an internal passage 121 through rotation of the blades.

In addition, the fan 123 may continuously transfer a fluid C outside the accommodating body 100 to an internal passage 121, thereby forcibly transferring a fluid C that is already present in the internal passage 121 to another space.

Through this process, a fluid (C) that has absorbed the heat generated from a battery cell 200 may be mixed or exchanged with a fluid (C) outside the accommodating body 100, which has a relatively low temperature, to more easily recover the heat generated from the battery cell 200. In addition, through the above process, the heat generated from a battery cell 200 may be dissipated by forced convection.

In an energy storage apparatus 10 according to an example of the present disclosure, an accommodating body 100 may include a plurality of accommodating portions 110. Referring to FIG. 1, the accommodating body 100 may include two accommodating portions 110, and each accommodating portion 110 may include a plurality of layered structures 111. In addition, each layered structure 111 may include a plurality of accommodating spaces 112. Referring to FIG. 2, the accommodating body 100 may include two accommodating portions 110, and each of the accommodating portions 110 may face each other. FIGS. 1 to 3 show an example in which the accommodating body 100 includes two accommodating portions 110, but those skilled in the art may easily understand that the accommodating body 100 may include more accommodating portions 110.

In an energy storage apparatus 10 according to an example of the present disclosure, the accommodating body 100 may include a plurality of accommodating portions 110, and an internal passage 121 may be positioned between a plurality of accommodating portions 110. When an internal passage 121 is positioned between a plurality of accommodating portions 110 as described above, it may be advantageous to more easily dissipate the heat generated from a battery cell 200. Referring to FIGS. 1, 2, and 3, an internal passage 121 through which a fluid C may pass may be positioned between two accommodating portions 110 facing each other.

Meanwhile, in an energy storage apparatus 10 according to an example of the present disclosure, at least a part of an accommodating portion 110 may be in communication with an internal passage 121. Specifically, the accommodating space 112 of the accommodating portion 110 may be in communication with the internal passage 121. Since the accommodating space 112 is in communication with the internal passage 121, a battery cell 200 accommodated in the accommodating space 112 may be in thermal contact with a fluid C passing through the internal passage 121. In detail, the thermal contact may mean a state of direct thermal contact.

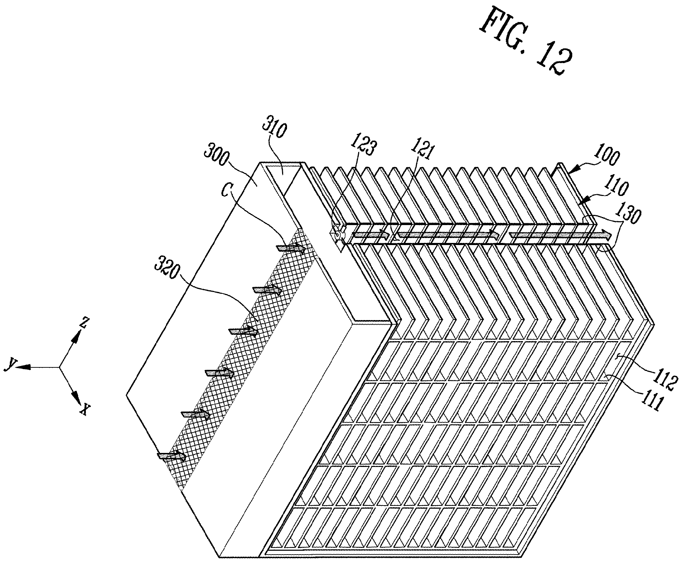

An energy storage apparatus 10 according to an example of the present disclosure may include a heat-conductive partition wall 130 between at least a part of an accommodating portion 110 and an internal passage 121 (see FIG. 12). The heat- conductive partition wall 130 may include a metal or resin of high thermal conductivity, and may preferably include a metal. In addition, a battery cell 200 inserted into an accommodating space 112 through the heat-conductive partition wall 130 may indirectly be in thermal contact with a fluid C passing through the internal passage 121.

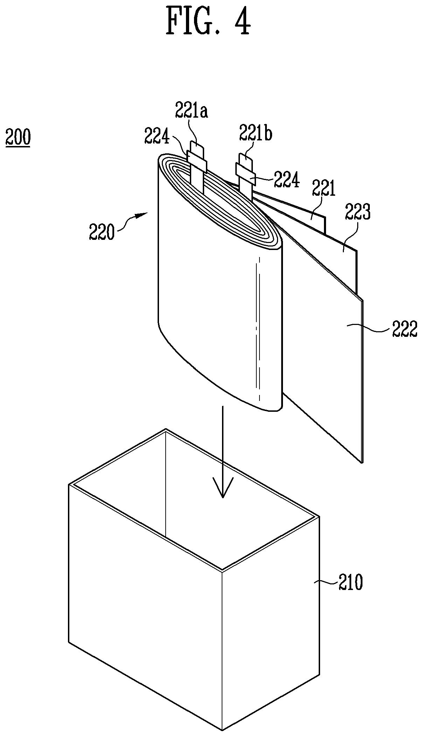

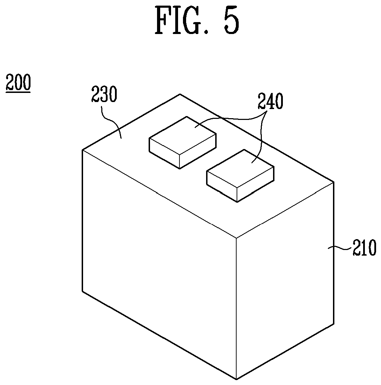

FIGS. 4 and 5 show diagrams briefly showing the structure of a battery cell 200 according to an example of the present disclosure. Referring to FIG. 4, in an energy storage apparatus 10 according to an example of the present disclosure, a battery cell 200 may include an exterior material 210. In addition, the battery cell 200 may include an electrode assembly 220, and the electrode assembly 220 may be embedded in an internal space formed by an exterior material 210.

In addition, an electrode assembly 220 may include one or more tabs 221a, 221b protruding from at least some surfaces. The tabs 221a, 221b may be formed on only one specific surface of an electrode assembly 220, and at this time, the tabs 221a, 221b may be referred to as unidirectional tabs 221a, 221b. In addition, the tabs 221a, 221b may be formed on a plurality of surfaces of the electrode assembly 220, and at this time, the tabs may be referred to as multi-directional tabs, and in particular, when they are formed on two surfaces of the electrode assembly 220, they may be referred to as bidirectional tabs. Referring to FIG. 5, the battery cell 200 may preferably have unidirectional tabs 221a, 221b.

In the energy storage apparatus 10 according to an example of the present disclosure, a battery cell 200 may include an exterior material 210, and the exterior material 210 may have various shapes. According to the shape of the exterior material 210, the battery cell 200 may be classified into a cylindrical type, a prismatic type, or a pouch type. Referring to FIGS. 4 and 5, a battery cell 200 according to an example of the present disclosure may be a prismatic battery cell 200.

Referring to FIGS. 4 and 5, in the prismatic battery cell 200, an exterior material 210 may have a hexahedral structure with one surface open so that an electrode assembly may be embedded. Specifically, the open surface may be determined according to the direction of the tabs 221a, 221b of the electrode assembly 220. However, the battery cell 200 described through the drawings in the present disclosure is described with a prismatic battery cell 200 merely as an example, and the battery cell 200 may be a cylindrical type or a pouch type.

In a battery cell 200 of an energy storage apparatus 10 according to an example of the present disclosure, an exterior material 210 may include an aluminum (Al) material. When the exterior material 210 includes an aluminum material, sufficient rigidity can be secured to protect an electrode assembly 220 from external shock or vibration, and there can be advantage in reducing the weight of the energy storage apparatus 10.

In a battery cell 200 of an energy storage apparatus 10 according to an example of the present disclosure, an exterior material 210 may provide an internal space so that an electrode assembly 220 may be embedded. As described above, an electrode assembly 220 may be embedded in the internal space. In addition, the internal space may include an electrolyte. The electrolyte may be in a liquid or a solid at room temperature, and preferably, it may be in a liquid at room temperature. When the electrolyte is a liquid at room temperature, it may be referred to as an electrolyte solution.

Referring to FIG. 4, in a battery cell 200 of an energy storage apparatus 10 according to an example of the present disclosure, an electrode assembly 220 may include electrodes 221, 222 and a separator 223. The electrodes 221, 222 may include a cathode 221 and an anode 222, and specifically, the electrode assembly may include a cathode 221, an anode 222, and a separator 223. In addition, in an electrode assembly 220, a separator 223 may be interposed between a cathode 221 and an anode 222.

In a battery cell 200 of an energy storage apparatus 10 according to an example of the present disclosure, an electrode assembly 220 is also referred to as a jelly roll. The electrode assembly 220 may be manufactured by winding a cathode 221, an anode 222, and a separator 223 in the form of a long sheet in the vertical direction. In another example, the electrode assembly 220 may be manufactured by a folding method (e.g. Z-folding method) in which a cathode 221 and an anode 222 that are cut into an appropriate size are inserted between separators 223 in the form of a long sheet in the vertical direction.

In a battery cell 200 of an energy storage apparatus 10 according to an example of the present disclosure, a cathode 221 of an electrode assembly 220 refers to a reduction electrode at which an electron transfer material receives electrons when the battery cell 200 is discharged. The electron transfer material may be, for example, lithium ions (Li⁺). In addition, an anode 222 of the electrode assembly 220 refers to an oxidation electrode at which which an electron transfer material transfers electrons when the battery cell 200 is discharged. The electron transfer material may be, for example, lithium ions (Li⁺). The cathode 221 and the anode 222 may each independently include a current collector and an active material layer formed on the current collector, and the current collector may include a metal material and the active material layer may include an active material. In addition, a cathode 221 may include a current collector including, for example, aluminum, and an anode 222 may include a current collector including, for example, copper.

In a battery cell 200 of an energy storage apparatus 10 according to an example of the present disclosure, a separator 223 of an electrode assembly 220 may refer to a membrane which prevents electrical short circuit between the cathode 221 and the anode 222 and through which an electron transfer material may pass. The electron transfer material may be, for example, lithium ions (Li⁺). The separator 223 is not particularly limited as long as it is used in the industry, and it is preferable that it has low resistance to the migration of ions of an electrolyte solution and has excellent moisture retention capacity (wettability) of the electrolyte solution.

Referring to FIG. 4, in a battery cell 200 of an energy storage apparatus 10 according to an example of the present disclosure, the electrode assembly 220 may include a cathode tab 221a and an anode tab 221b on one side. The cathode tab 221a extends from a cathode 221 and may have a protruding structure on one side of the electrode assembly 220. In addition, the anode 221b extends from an anode 222 and may have a protruding structure on one side of the electrode assembly 220. In addition, a cathode tab 221a and an anode tab 221b of the electrode assembly 220 may be made of a metal material, the cathode tab 221a may be made of the same material as a current collector of a cathode 221, and the anode tab 221b may be made of the same material as a current collector of an anode 222. In addition, an insulating tape 224 may be independently attached to the cathode tab 221a and the anode tab 221b. The insulating tape 224 may have electrical insulation properties and may be formed to surround the outside of each of the cathode tab 221a and the anode tab 221b. Referring to FIG. 4, an insulating tape 224 is attached to a cathode tab 221a and an anode tab 221b. However, this is attached as needed, and the insulating tape 224 may not be attached to a tab 221a, 221b.

In a battery cell 200 of an energy storage apparatus 10 according to an example of the present disclosure, an electrolyte may refer to a medium that causes the movement of an electron transport material to allow an electrochemical reaction to smoothly occur between an cathode 221 and an anode 222. The electron transfer material may be, for example, lithium ions (Li⁺). In addition, the electrolyte may be solid at room temperature, and in this case, the solid electrolyte may be interposed in the form of a layer between a cathode 221 and an anode 222 to simultaneously perform the role of a separator 223, and a battery cell 200 at this time may be referred to as an all-solid battery. The solid electrolyte may include those used in the art without limitation. In addition, the electrolyte may be an electrolyte solution that is liquid at room temperature, as described above. The liquid electrolyte may include those used in the art without limitation, and may generally include an organic solvent and a lithium salt.

A battery cell 200 of an energy storage apparatus 10 according to an example of the present disclosure may include a cap 230 capable of sealing an open surface of the exterior material 210. The cap 230 may be connected to an exterior material 210, specifically, it may be connected through welding. The cap 230 may include a metal material like an exterior material 210. In addition, the cap 230 may further include an inlet through which an electrolyte may be injected into an internal space of the exterior material 210.

In addition, referring to FIG. 5, the battery cell 200 may include a protruding terminal 240 on at least one surface. The terminal 240 may be provided on a cap 230, and may protrude in one direction of the battery cell 200 and into an internal space of an exterior material 210. Here, the terminal 240 protruding into an inner space of the exterior material 210 may be welded to a tab 221a, 221b, and through this, the terminal 240 and a tab 221a, 221b may be electrically connected.

The term "electrically connected" as used in the present disclosure may mean a state in which an electric circuit is configured when connected objects are connected by a connecting means so that a current may flow to each connected object. The connecting means is not particularly limited as long as electrical connection is possible, but it may be direct contact between connected objects or a wire through which a current may flow.

In an energy storage apparatus 10 according to one example of the present disclosure, it may be preferable that the battery cell 200 includes a unidirectional terminal 240 to maximize the structure of an accommodating body 100 and the heat dissipation effect. In other words, a terminal 240 of the battery cell 200 may protrude only on one surface of the battery cell 200.

An energy storage apparatus 10 according to an example of the present disclosure may include one or more battery cells 200. In the energy storage apparatus 10, a battery cell 200 may be inserted into at least a part of an accommodating space 112 provided in an accommodating portion 110.

Preferably, an energy storage apparatus 10 according to an example of the present disclosure may include a battery cell 200 according to the number of accommodating spaces 112 provided in an accommodating portion 110. In addition, when the number of the accommodating spaces 112 is plural, the energy storage apparatus 10 may include a plurality of battery cells 200, and the battery cells 200 may each be inserted into each of the accommodating spaces 112.

FIG. 6 briefly shows the structure of an energy storage apparatus 10 according to an example of the present disclosure, and is a diagram showing a battery cell 200 being inserted into an accommodating space 112.

Referring to FIG. 6, in an energy storage apparatus 10 according to an example of the present disclosure, a battery cell 200 may include a terminal 240 protruding on at least one surface. In addition, the battery cell 200 may include a terminal 240 protruding on only one surface. The battery cell 200 may preferably include a unidirectional terminal 240 which is a terminal 240 protruding on only one surface.

In an energy storage apparatus 10 according to an example of the present disclosure, a surface of a battery cell 200 that is different from a surface on which a terminal 240 protrudes may be in thermal contact with a fluid C passing through an internal passage 121. In other words, a surface of the battery cell 200 that is different from a surface on which a terminal 240 protrudes may be provided in a direction toward an internal passage 121, and the different surface may be thermal contact with a fluid C passing through an internal passage 121.

In an energy storage apparatus 10 according to an example of the present disclosure, a battery cell 200 may include a terminal 240 protruding on only one surface as described above, and a surface of the battery cell 200 that is opposite to a surface on which the terminal 240 protrudes may be in thermal contact with a fluid C passing through an internal passage 121.

In an energy storage apparatus 10 according to an example of the present disclosure, a terminal 240 of a battery cell 200 may protrude toward the outside of an accommodating body 100. Referring to FIG. 6, a battery cell 200 may be inserted into an accommodating space 112 so that a terminal 240 protrudes toward the outside of an accommodating body 100.

Referring to FIG. 6, as described above, a terminal 240 of a battery cell 200 may protrude toward the outside of an accommodating body 100. In addition, a terminal 240 of a battery cell 200 may protrude in a direction opposite to an internal passage 121. In other words, the battery cell 200 may be inserted into an accommodating space 112 so that a surface of the battery cell 200 that is opposite to the surface on which the terminal 240 protrudes is in thermal contact with a fluid C passing through an internal passage 121.

As described above, when a surface of a battery cell 200 that is opposite to a surface on which a terminal 240 protrudes is brought into thermal contact with a fluid C passing through an internal passage 121, it may be easier to manage the heat generated from the battery cell 200. In particular, since the fluid C passing through forced convection becomes a heat dissipation medium, it may be easier to manage the heat generated from the battery cell 200 included in the energy storage apparatus 10.

FIGS. 7 and 8 briefly show a part of the structure of an energy storage apparatus 10 according to an example of the present disclosure, and are diagrams showing a battery cell 200 being inserted into an accommodating space 112. Specifically, FIGS. 7 and 8 show the structure of a accommodating space 112 of one layered structure 111.

In an energy storage apparatus 10 according to an example of the present disclosure, a layered structure 111 may include a resin layer 113 on an inner wall provided with an accommodating space 112. Referring to FIG. 7, a battery cell 200 is inserted into an accommodating space 112 so that a terminal 240 protrudes toward the outside of the accommodating body 100. Here, the inner wall provided with the accommodating space 112 may include a resin layer 113, and the resin layer 113 may be positioned in at least some regions of the inner wall, and preferably, it may be positioned in all regions of the inner wall except for the surface facing an internal passage 121.

In an energy storage apparatus 10 according to an example of the present disclosure, the thickness of a resin layer 113 may be determined according to the size of a battery cell 200 to be inserted into the accommodating space 112. The resin layer 113 may have a thickness that prevents a battery cell 200 from easily escaping from an accommodating space 112 after the battery cell to be inserted is inserted into the accommodating space 112.

In an energy storage apparatus 10 according to an example of the present disclosure, a resin layer 113 may include a hygroscopic material. The hygroscopic material may include one or more selected from the group consisting of polyethylene (PE), polypropylene (PP), polyvinylidene fluoride (PVDF) or derivatives thereof, and polyurethane (PU).

Meanwhile, when a battery cell 200 is repeatedly charged and discharged, a swelling phenomenon may occur, which may cause problems such as electrolyte leakage or ignition. In an energy storage apparatus 10 according to an example of the present disclosure, a resin layer 113 may be provided to fit the size of a battery cell 200 and include a hygroscopic material, thereby preventing the above problems.

In an energy storage apparatus 10 according to an example of the present disclosure, a layered structure 111 may include a resin layer 113 on an inner wall provided with an accommodating space 112 so that the layered structure 111 may pressurize a battery cell 200 accommodated in an accommodating space 112. Referring to FIG. 8, a battery cell 200 accommodated in an accommodating space 112 may be pressurized by a resin layer 113. The pressure applied to the battery cell 200 may be applied constantly and continuously after the battery cell 200 is accommodated in an accommodating space 112.

In an energy storage apparatus 10 according to an example of the present disclosure, since a battery cell 200 embedded in an accommodating space 112 is pressurized by a resin layer 113, an effect of stabilizing the charge and discharge lifetime and the cycle and extending the lifetime of the battery cell 200 can be expected. In addition, even when the battery cell 200 is directly inserted into an accommodating space 112 without further housing treatment, the resin layer 113 may improve the problem of vulnerability to vibration or external shock.

In an energy storage apparatus 10 according to an example of the present disclosure, at least a part of a battery cell 200 may be in contact with a resin layer 113. Specifically, at least a part of a surface that is different from a surface on which a terminal 240 of the battery cell 200 protrudes and from a surface in thermal contact with a fluid C passing through an internal passage 121 may be in contact with a resin layer 113. In addition, at least a part of the surface of the battery cell 200 that is in contact with the resin layer 113 may be pressurized by the resin layer 113. Preferably, all surfaces that are different from a surface on which a terminal 240 of the battery cell 200 protrudes and from a surface in thermal contact with a fluid C passing through an internal passage 121 may be in contact with a resin layer 113, and a surface in contact with the resin layer 113 may be pressurized.

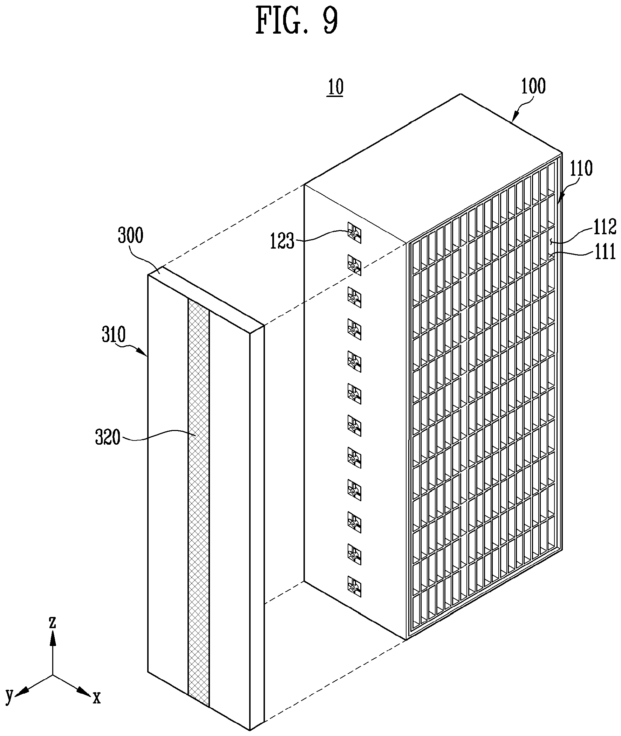

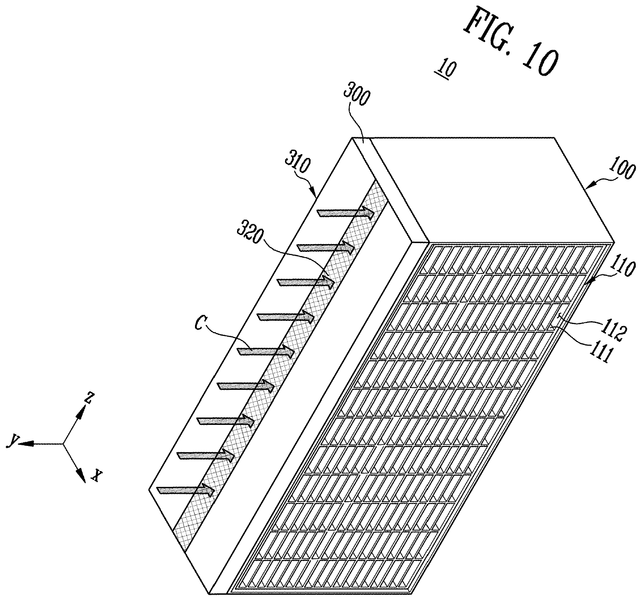

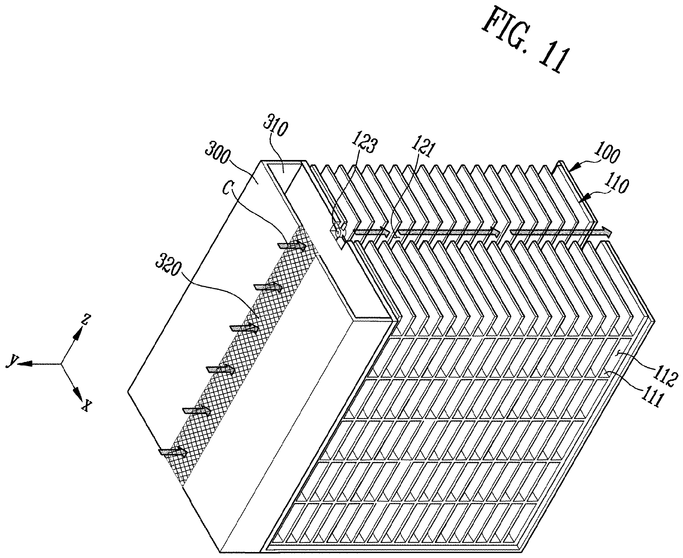

FIGS. 9 and 10 show diagrams briefly showing the structure of an energy storage apparatus 10 according to an example of the present disclosure. In addition, FIGS. 11 and 12 briefly show the structure of an energy storage apparatus according to an example of the present disclosure, and are a diagrams showing a cross-section that is cut along the XY-plane in FIG. 10.

An energy storage apparatus 10 according to an example of the present disclosure may include a front cover 300 covering at least one hole 122. Referring to FIGS. 9 and 10, the front cover 300 may be in contact with and connected to at least some regions of a surface of an accommodating body 100 in which a hole 122 is formed. The front cover 300 and the accommodating body 100 may be connected, for example, by welding or through an adhesive. Meanwhile, the front cover 300 may include a metal.

In energy storage apparatus 10 according to an example of the present disclosure, the front cover 300 may include a fluid passage portion 320 that allows a fluid C to pass at a position corresponding to the hole 122. The fluid passage portion 320 may have a net mesh-shaped structure to allow the fluid C to pass through, and the net mesh-shaped structure may include fine holes to prevent external foreign substances from entering into a fan 123. The fluid passage portion 320 may include the same material as a front cover 300. And the accommodating body may include a fan at a position corresponding to the one or more holes.

In an energy storage apparatus 10 according to an example of the present disclosure, the fluid C may pass through the fluid passage portion 320 by the operation of a fan 123, and a fluid C that has been introduced through the fluid passage portion 320 may be introduced into an internal passage 121 again through continued operation of the fan 123.

In addition, the position corresponding to the hole 122 may refer to a position facing the hole 122. Referring to FIGS. 9 and 10, a fluid passage portion 320 may be positioned to face holes 122. In other words, the front cover 300 may include a fluid passage portion 320 in some regions, and the fluid passage portion 320 allow a fluid C to pass through, and the fluid passage portion 320 may be at a position facing the holes formed in an accommodating body 100.

In an energy storage apparatus 10 according to an example of the present disclosure, a fluid passage portion 320 may be spaced apart from a hole 122. Referring to FIGS. 9 and 10, the fluid passage portion 320 may be spaced apart from holes 122. In addition, the fluid passage portion 320 may be positioned to face holes 122 and be spaced apart therefrom.

In addition, in an energy storage apparatus 10 according to an example of the present disclosure, a fluid passage portion 320 may be positioned to face all holes 122 on one surface formed in an accommodating body 100. In addition, the fluid passage portion 320 may be spaced apart from all holes 122 on one surface formed in an accommodating body 100.

In addition, the front cover 300 may include a fluid passage portion 320 that allows a fluid C to pass through at a position corresponding to the fan 123. A position corresponding to the fan 123 may refer to a position facing the fan 123. Referring to FIGS. 9 and 10, specifically, a fluid passage portion 320 may be positioned to face fans 123. In other words, a front cover 300 may include a fluid passage portion 320 in some regions, and the fluid passage portion 320 may allow a fluid C to pass through. In addition, the fluid passage portion 320 may be at a position facing fans 123.

In an energy storage apparatus 10 according to an example of the present disclosure, a fluid passage portion 320 may be spaced apart from a fan 123. Referring to FIGS. 9 and 10, the fluid passage portion 320 may be spaced apart from fans 123. In addition, the fluid passage portion 320 may be positioned to face fans 123 and be spaced apart therefrom.

In addition, in an energy storage apparatus 10 according to an example of the present disclosure, a fluid passage portion 320 may be positioned to face all fans 123 provided on one surface of an accommodating body 100. In addition, a fluid passage portion 320 may be spaced apart from all fans 123 provided on one surface of an accommodating body 100.

In an energy storage apparatus 10 according to an example of the present disclosure, a front cover 300 may further include a spacing portion 310. Referring to FIGS. 9 and 10, the front cover 300 may be connected to an accommodating body 100 and may include a spacing portion 310 that is in direct contact with and connected to the accommodating body 100. The accommodating body 100 and the spacing portion 310 may be connected, for example, by welding or through an adhesive. Meanwhile, the spacing portion 310 may include a metal. The front cover 300 may be connected to an accommodating body 100 through the spacing portion 310.

In an energy storage apparatus 10 according to an example of the present disclosure, a region of a front cover 300 other than a spacing portion 310 may not be connected to an accommodating body 100. The front cover 300 may include a spacing portion 310 connected to an accommodating body 100 and a fluid passage portion 320 spaced apart from the accommodating body 100.

Referring to FIG. 11, a spacing portion 310 of a front cover 300 may be connected to an accommodating body 100, and a fluid passage portion 320 may not be connected to the accommodating body 100. In addition, a spacing portion 310 of the front cover 300 may be connected to an accommodating body 100, and a fluid passage portion 320 may be spaced apart from the accommodating body 100. In addition, a spacing portion 310 of the front cover 300 may be connected to an accommodating body 100, and a fluid passage portion 320 may face the accommodating body 100 and be spaced apart therefrom. When the energy storage apparatus 10 includes a front cover 300 having such a structure, a fluid C may be introduced into an internal passage 121 while an inflow of external foreign substances is prevented. In addition, through a front cover 300 having the above structure, a separated space exists between the front cover 300 and one surface of an accommodating body 100, and a fluid C filled in the separated space may dissipate the heat emitted from a battery cell 200. In other words, while passing through an internal passage 121 through the front cover 300, the fluid C may not only directly recover the heat generated from the battery cell 200 but also simultaneously recover the heat generated from the battery cell that has been conducted to an accommodating body 100 through the above-described separated space. Therefore, it may be easier to manage the heat generated from a battery cell 200.

Referring to FIG. 12, an accommodating body 100 may include a heat-conductive partition wall 130. The heat-conductive partition wall 130 may be positioned between an accommodating portion 110 and an internal passage 121. As described above, the heat-conductive partition wall 130 may include a metal or a resin of high thermal conductivity, and may preferably include a metal. In addition, the heat-conductive partition wall 130 and a battery cell 200 may be in direct contact, and the heat generated from the battery cell 200 may be conducted to the heat-conductive partition wall 130. The heat conducted to the heat-conductive partition wall 130 may be dissipated by a fluid C passing through an internal passage 121. A battery cell 200 inserted into an accommodating space 112 through the heat-conductive partition wall 130 may be in indirect thermal contact with a fluid C passing through the internal passage 121.

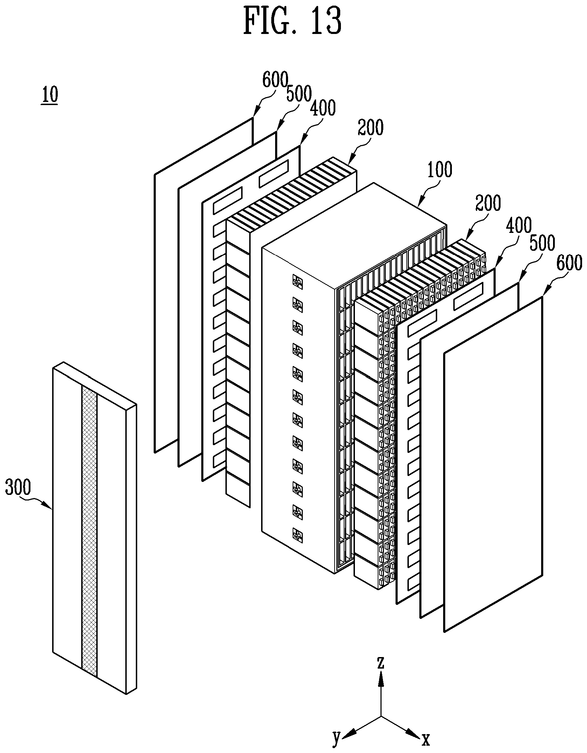

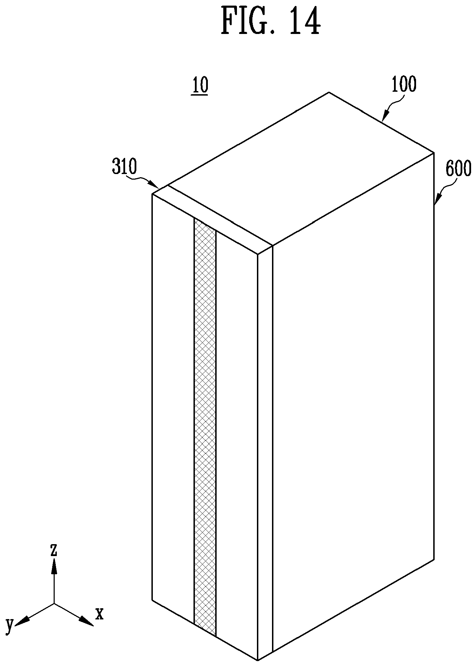

FIGS. 13 and 14 show diagrams briefly showing the structure of an energy storage apparatus 10 according to an example of the present disclosure. An energy storage apparatus 10 according to an example of the present disclosure may include a busbar assembly 400 including one or more busbar structures. In addition, the energy storage apparatus 10 may include an insulating layer. In addition, the energy storage apparatus 10 may include a side cover 600 to protect a battery cell 200 inserted into an accommodating body 100 from external foreign substances.

Referring to FIG. 13, an energy storage apparatus 10 according to an example of the present disclosure may include a busbar assembly that can be electrically connected to a terminal 240 of the battery cell 200. Specifically, the busbar assembly may include a busbar structure, and the busbar structure may be directly electrically connected to a terminal 240 of each battery cell 200. Here, direct connection may refer to connection by welding.

In addition, referring to FIG. 13, an energy storage apparatus 10 according to an example of the present disclosure may include a side cover 600 that can cover at least a part of the busbar assembly 400. In addition, the energy storage apparatus 10 may include an insulating layer 500 to increase safety by securing electrical insulation between a busbar assembly 400 and a side cover 600. The insulating layer 500 is not particularly limited as long as it is an electrically insulating material in the art, and it may include, for example, one or more selected from the group consisting of polyethylene, polypropylene, polyvinylidene fluoride, and derivatives thereof.

Referring to FIG. 14, in an energy storage apparatus 10 according to an example of the present disclosure, at least one surface of an accommodating body 100 may be covered with a front cover 300 and a side cover 600 so that external foreign substances may be prevented from flowing into an accommodating portion 110 in the accommodating body 100 or an internal passage 121.

An energy storage system according to an example of the present disclosure may include an energy storage apparatus 10 according to an example of the present disclosure. In addition, the energy storage system may include one or more energy storage apparatuses 10. In addition, the energy storage system may include the conditions of the included energy storage apparatus 10 (e.g. temperature, storage capacity, or operation status), external environment (temperature or humidity), and a control device for controlling the supply of energy and discontinuation thereof. In addition, the energy storage system may further include components that are commonly used in the art.

## Claims

1. An energy storage apparatus comprising:
an accommodating body including an accommodating portion including a layered structure provided with an accommodating space and an internal passage through which a fluid is allowed to pass; and
a battery cell accommodated in the accommodating space,
wherein the battery cell is in thermal contact with a fluid passing through the internal passage.

2. The energy storage apparatus according to claim 1, wherein the accommodating body includes one or more holes so that the internal passage communicates with the outside of the accommodating body.

3. The energy storage apparatus according to claim 1 or claim 2, wherein the accommodating body includes a fan at a position corresponding to the one or more holes, and
wherein the fan transfers a fluid outside the accommodating body to the internal passage.

4. The energy storage apparatus according to any one of the preceding claims, wherein the battery cell includes a terminal protruding on at least one surface, and
wherein a surface of the battery cell that is different from the surface on which the terminal protrudes is in thermal contact with a fluid passing through the internal passage.

5. The energy storage apparatus according to claim 4, wherein the battery cell includes a terminal protruding on only one surface, and
wherein a surface of the battery cell that is opposite to the surface on which the terminal protrudes is in thermal contact with a fluid passing through the internal passage.

6. The energy storage apparatus according to claim 4 or claim 5, wherein the terminal protrudes toward the outside of the accommodating body.

7. The energy storage apparatus according to any one of the preceding claims, wherein the layered structure further includes a resin layer on an inner wall provided with the accommodating space.

8. The energy storage apparatus according to claim 7, wherein the layered structure pressurizes the battery cell accommodated in the accommodating space.

9. The energy storage apparatus according to any one of the preceding claims, wherein the accommodating body includes a plurality of accommodating portions.

10. The energy storage apparatus according to claim 9, wherein the internal passage is positioned between the plurality of accommodating portions.

11. The energy storage apparatus according to claim 2, further comprising: a front cover covering at least a part of the one or more holes,
wherein the front cover includes a fluid passage portion allowing a fluid to pass at a position corresponding to the one or more holes.

12. The energy storage apparatus according to claim 11, wherein the front cover further includes a spacing portion, and
wherein the spacing portion is connected to the accommodating body.

13. The energy storage apparatus according to claim 11 or claim 12, wherein the fluid passage portion is spaced apart from the one or more holes.

14. The energy storage apparatus according to any one of the preceding claims, wherein the accommodating body includes a heat-conductive partition wall, and
wherein the heat-conductive partition wall is positioned between the accommodating portion and the internal passage.

15. The energy storage apparatus according to claim 14, wherein the battery cell is in direct contact with the heat-conductive partition wall.
